# EUROPÄISCHE PATENTSCHRIFT

(11) **EP 0 851 041 B1**
(45) Veröffentlichungstag und Bekanntmachung des Hinweises auf die Patenterteilung: **03.04.2002**
(21) Anmeldenummer: 97122145.2
(22) Anmeldetag: 16.12.1997
(51) Int. Cl.: C23C 18/31

(54) **Innen verzinntes Kupferrohr und Verfahren zur Beschichtung eines Kupferrohrs**
Copper tube plated on the inside with tin and process for plating of a copper tube
Tube en cuivre revêtu à l'interieure avec d'étain et procédé de revêtement d'un tube en cuivre

(30) Priorität: 23.12.1996 DE 19653765
(43) Veröffentlichungstag der Anmeldung: 01.07.1998
(73) Patentinhaber: KM Europa Metal Aktiengesellschaft, D-49023 Osnabrück (DE)
(72) Erfinder: Baukloh, Achim, Dr., 49186 Bad Iburg (DE); Reiter, Ulrich, Dr., 49080 Osnabrück (DE)

(56) Entgegenhaltungen:
- EP-A- 0 180 265
- WO-A-97/46732
- DE-A- 3 800 918
- US-A- 2 282 511
- DATABASE WPI Section Ch, Week 9630 Derwent Publications Ltd., London, GB; Class M13, AN 96-295789 XP002062019 & JP 08 127 877 A (KOBE STEEL LTD)

## Beschreibung

### Beschreibung für folgende Vertragsstaaten : DE, FI, FR, IT

Die Erfindung betrifft ein Installationsrohr aus Kupfer mit einer vollflächig haftenden Zinnschicht auf der Innenoberfläche und andererseits ein Verfahren zur Beschichtung eines Kupferrohrs.

Installationsrohre aus Kupfer haben sich für alle Versorgungsleitungen in der Hausinstallation, insbesondere der Trinkwasserversorgung, bewährt. Um die Kupferionenabgabe an das Wasser zu mindern, werden nahtlos gezogene Kupferrohre eingesetzt mit einer verzinnten Innenoberfläche. Solche Installationsrohre erfüllen die gesetzlichen Anforderungen hinsichtlich des Maximalgrenzwerts der Kupferionenabgabe an das Wasser von 3 mg/l nach zwölf Stunden Stagnation in der Rohrleitung in allen Trinkwässern.

Ein gebräuchliches Verfahren der Innenverzinnung von Kupferrohren ist die chemische Abscheidung von Zinn auf der Innenoberfläche der Kupferrohre, wie dies beispielsweise in der US-A-2 282 511 beschrieben ist.

Hierzu wird das Kupferrohr mit einer chemischen Verzinnungslösung durchspült. Die Abscheidung von Zinn erfolgt dann durch einfache chemische Metallverdrängung (Ionenaustausch). Es lösen sich Kupferionen aus dem Grundmetall und gleichzeitig wird eine äquivalente Menge Zinnionen aus der Verzinnungslösung abgeschieden. Dies geschieht unter dem Einfluß des Potentials, das zwischen der Verzinnungslösung und dem Kupfer besteht. Eine äußere Spannung oder ein elektrischer Strom ist nicht erforderlich.

Die Vorteile der chemischen Verzinnung bestehen in einer einfachen Arbeitsweise bei vergleichsweise geringem Kostenaufwand für die apparative Einrichtung sowie der Möglichkeit, Zinn an den Innenseiten der ansonsten nur schwer zugänglichen Kupferrohre abzuscheiden.

Nachteilig ist jedoch die Tatsache, daß der Austausch von Zinnionen gegen Kupferionen in Abhängigkeit von der vorhandenen Potentialdifferenz zwischen der Verzinnungslösung und dem Kupferrohr abläuft. Die Abscheidungsrate nimmt daher in Abhängigkeit von der aufgebrachten Schichtdicke ab, wodurch sich ein inhomogener Schichtaufbau ergibt. Die Reaktion kommt zum Stillstand, sobald das Grundmetall vollständig durch den Überzug bedeckt ist.

Femer ist festzustellen, daß die Zinnkristalle während des Verzinnungsprozesses relativ unorientiert wachsen. Dies führt zu einer großen freien Oberfläche der Zinnschicht, wodurch bei der späteren Verwendung der Installationsrohre eine Zinnionenabgabe an das Wasser begünstigt wird. Weiterhin wirkt sich dieser Umstand nachteilig auf die Korrosionsbeständigkeit der Zinnschicht aus.

Die WO-A-97/46732 bzw. die EP-A-0848 084 mit der Priorität vom 05. Juni 1996 (JP 165397/96) und vom 27. Juni 1996 (JP 188699/96). veröffentlicht am 11. Dezember 1997, ist gemäß Artikel 54 (3) und (4) EPÜ für die Vertragsstaaten DE, FI, FR, IT als Stand der Technik zu berücksichtigen. Hieraus ist ein stromloses Verfahren zur innenseitigen Verzinnung von Kupferrohren durch Spülen mit einer Verzinnungslösung bekannt. Die Temperatur ist im ersten Spülvorgang niedriger gewählt als im zweiten Spülvorgang, wobei die Temperatur zwischen den beiden Spülvorgängen kontinuierlich angehoben werden kann.

Wegen der in der Praxis häufig auftretenden Schwankungen in der Qualität der Trinkwässer ist man bestrebt, die Sicherheit weiter zu vergrößern, das heißt, die Abgabe von Kupferionen an die zum menschlichen Verbrauch bestimmten Wässer durch Innenverzinnung der Kupferrohre weiter zu reduzieren. Gleichzeitig muß auch die Zinnionenabgabe im innen verzinnten Kupferrohr minimiert werden. Dies trifft insbesondere für Wässer mit niedrigem pH-Wert oder einem hohen Anteil an freier Kohlensäure (K_{B 8,2} > 1,0 mol/m³) zu.

Der Erfindung liegt daher ausgehend vom Stand der Technik die Aufgabe zugrunde, ein Installationsrohr aus Kupfer mit einer verbesserten inneren Schicht aus Zinn zu schaffen, welche auch gegen aggressive Wässer bzw. Flüssigkeiten resistent ist, sowie ein Verfahren zur Beschichtung von Kupferrohren aufzuzeigen, welches einen homogenen und dichten Aufbau der inneren Zinnschicht ermöglicht.

Die Lösung des verfahrensmäßigen Teils der Aufgabe ist nach Anspruch 1 darin zu sehen, daß die Temperatur der Verzinnungslösung zweckgerecht variiert wird, so daß eine homogene dichte Schicht aus Zinn entsteht, wobei der Verzinnungsprozeß mit einer Verzinnungslösung beendet wird, deren Temperatur gegenüber der Temperatur der Verzinnungslösung des vorhergehenden Spülvorgangs abgesenkt ist.

Die Dauer des Verzinnungsvorgangs und die Temperaturabsenkung der Verzinnungslösung wird dabei so bestimmt, daß noch beim abschließenden Spülvorgang Zinn abgeschieden wird. Hierdurch kann eine weitere Verbesserung der Oberfläche der Zinnschicht hinsichtlich Aufbau und Dichtheit erreicht werden. Ferner wird das Entstehen von großen Wiskem vermieden. Folglich wird die Ausbildung einer kupferarmen und dichten inneren Oberfläche der Zinnschicht begünstigt.

Der Verzinnungsprozeß wird so begonnen, daß eine große Zahl von gleichmäßig verteilten Kristallkeimen mit gleicher Orientierung entsteht. Anschließend wird die Temperatur gezielt so eingestellt, daß das Wachstum der Kristalle gesteigert wird, wobei diese mit gleichbleibender Orientierung wachsen.

Nach dem ersten Schritt, in dem die Orientierung der Kristalle festgelegt wird, werden somit Bedingungen hergestellt, die zu einem schnellen Wachstum der Kristalle mit gleicher Orientierung führen. Hierdurch erhält man einen homogenen gepackten Aufbau der Zinnschicht, und zwar in einer prozeßoptimiert kurzen Verzinnungszeit. Dies führt insbesondere zu einer merklichen Senkung der Produktionskosten.

Zur Gewährleistung einer möglichst geringen intermetallischen Phase an der Kupferoberfläche beginnt man den Verzinnungsprozeß bei einer geringen Temperatur. In einem folgenden Spülvorgang wählt man eine möglichst hohe Temperatur, um eine hohe Abscheidungsrate und die gewünschte Schichtdicke zu erreichen.

Die Temperatursteuerung kann stufenweise vorgenommen werden, wie dies Anspruch 2 vorsieht. Das zu verzinnende Kupferrohr wird dabei zunächst mit einer Verzinnungslösung durchgespült, die eine Temperatur zwischen 35 °C und 45 °C aufweist. In einem zweiten Spülvorgang liegt die Temperatur der Verzinnungslösung dann zwischen 70 °C und 85 °C.

Eine besonders vorteilhafte Ausführungsform des allgemeinen Erfindungsgedankens ist in den Merkmalen des Anspruchs 3 charakterisiert. Dabei wird die Temperatur der Verzinnungslösung beim Durchspülen kontinuierlich von einer Temperatur zwischen 35 °C und 45 °C auf eine Temperatur zwischen 70 °C und 85 °C erhöht.

Die Temperatursteigerung kann beispielsweise durch eine Durchlauferhitzung der Verzinnungslösung erreicht werden. Hierbei kann eine zeitabhängige Abstimmung auf die Abscheidungsrate und die angestrebtes Korngröße der Zinnkristalle vorgenommen werden.

Zweckmäßig kann es auch sein, die chemische Zusammensetzung der Verzinnungslösung auf den temperaturgesteuerten Verzinnungsvorgang abzustimmen.

Das erfindungsgemäße Verfahren läßt sich in einem kontinuierlichen Fertigungsprozeß besonders wirtschaftlich durchführen. Als Ausgangsmaterial wird ein Kupferrohr bereitgestellt, welches vorzugsweise in Coils von mehreren Hundert Metern Länge aufgerollt ist Dieses wird zunächst mit einem alkalischen oder einem sauren Reinigungsmittel innen entfettet. Nach dem Entfettungsvorgang wird das Kupferrohr mit Wasser vorgespült. Hieran schließt sich eine weitere Vorbehandlung der inneren Oberfläche des Kupferrohrs durch Beizen an, z. B. mit Kaliumpersulfat.

Optional wird nach dem Beizen gespült mit vollentsalztem Wasser. Denkbar ist auch der Einsatz einer Beize, die verträglich ist mit der verwendeten Verzinnungslösung, sö daß auf einen nochmaligen Spülvorgang verzichtet werden kann.

Da am Anfang der Kupfergehalt im aufgebrachten Zinn sehr klein gehalten werden soll, kann es von Vorteil sein, wenn das Kupferrohr möglichst kalt in den Verzinnungsprozeß eingeht. Dies kann beispielsweise dadurch erreicht werden, daß die Beize oder das anschließende Spülwasser kalt ist.

Im Anschluß an die Vorbehandlung wird die temperaturgesteuerte Verzinnung vorgenommen, bei der das Kupferrohr mit einer chemischen Verzinnungslösung durchspült wird. Hierbei wird die Abscheidungsrate aus der Verzinnungslösung sowie der Korngrößen- und Packungsaufbau der Zinnschicht durch eine Temperatureinstellung bzw. -steuerung geregelt.

Nach dem Verzinnungsvorgang wird das Kupferrohr kalt oder heiß gespült und getrocknet.

Die Lösung des gegenständlichen Teils der Aufgabe ist in den Merkmalen des Anspruchs 4 zu sehen.

Erfindungsgemäß weist das Installationsrohr aus Kupfer eine vollflächig haftende temperaturgesteuert aufgebrachte Zinnschicht auf die Innenoberfläche auf. Hierbei ist die Dicke der am Übergang vom Kupferrohr auf die Zinnschicht ausgebildeten intermetallischen Phase kleiner als 20 %, vorzugsweise kleiner als 5 % der Gesamtschichtdicke. Der Kupferanteil der Zinnschicht in dem der Rohrachse zugewandten Bereich, also an der wasserseitigen Oberfläche, ist kleiner als 10 %. Vorzugsweise liegt der Anteil bei 3 %. An der wasserseitigen Oberfläche der Zinnschicht liegt dann eine reine und kupferarme Zinnschicht vor. Die mittlere Korngröße der Zinnkristalle im Verhältnis zur Gesamtschichtdicke beträgt maximal ein Drittel der Gesamtschichtdicke.

Am Übergang zwischen Kupferrohr und Zinnschicht bildet sich eine Legierungsschicht, die intermetallische Phasen enthält. Diese trägt zwar zu einer guten Haftfestigkeit der Zinnschicht bei, ist aber spröde, was sich nachteilig auf die technische Verwendung der Installationsrohre ausgewirkt. Derartige anwendungstechnische Nachteile werden bei dem erfindungsgemäßen Installationsrohr reduziert.

Die Dicke der intermetallischen Phase wird erfindungsgemäß so stark ausgebildet, daß ein inniger Verbund zwischen Kupferrohr und Zinnschicht gewährleistet ist, sich andererseits aber die Sprödigkeit der intermetallischen Phase nicht nachteilig auf die technische Verwendung des Installationsrohrs auswirkt.

Die Gesamtschichtdicke kann den jeweiligen Anforderungen an die Installationsrohre entsprechend zwischen 0,05 µm und größer als 1,5 µm betragen. Über die Temperatursteuerung des Verzinnungsprozesses kann die Dicke der intermetallischen Phase beeinflußt werden. Denkbar ist es auch, gezielt auf die Zusammensetzung der intermetallischen Phase (beispielsweise Cu₆Sn₅) einzuwirken.

Auf die Dichtigkeit der freien Oberfläche der Zinnschicht wirkt sich besonders vorteilhaft aus, daß die Korngröße der abgeschiedenen Zinnkristalle klein ist und diese eine globulitische Form aufweisen. Sie sind dann kugelähnlich mit einem in alle Richtungen annähernd gleichen Durchmesser, wodurch eine dichte Packungslage möglich ist.

Die temperaturgesteuert aufgebrachte Zinnschicht kennzeichnet sich durch kleine gleichmäßig nebeneinander gepackte Kristalle. Hieraus resultiert eine wesentlich geringere freie Oberfläche der Schicht.

Die Zinnschicht dieses Installationsrohrs weist höchste Haftfestigkeit und sehr gute Korrosionsbeständigkeit auf. Durch die Homogenität und den feinkömigen Aufbau der Zinnschicht ist die Angriffsfläche für die in den Rohren transportierten Flüssigkeiten minimiert. Hierdurch ist gewährleistet, daß die Kupferionenabgabe deutlich unter dem zulässigen Maximalwert liegt. Desweiteren ist auch die Zinnlöslichkeit und damit die Zinnionenabgabe minimiert.

Letztlich zeichnet sich das erfindungsgemäße Installationsrohr durch die hohe Beständigkeit der Zinnschicht gegenüber mechanischer Beanspruchung aus.

### Beschreibung für folgende Vertragsstaaten : AT, BE, CH/LI, DK, ES, GB, GR, IE, LU, MC, NL, PT, SE

Die Erfindung betrifft ein Installationsrohr aus Kupfer mit einer vollflächig haftenden Zinnschicht auf der Innenoberfläche und andererseits ein Verfahren zur Beschichtung eines Kupferrohrs.

Installationsrohre aus Kupfer haben sich für alle Versorgungsleitungen in der Hausinstallation, insbesondere der Trinkwasserversorgung, bewährt. Um die Kupferionenabgabe an das Wasser zu mindern, werden nahtlos gezogene Kupferrohre eingesetzt mit einer verzinnten Innenoberfläche. Solche Installationsrohre erfüllen die gesetzlichen Anforderungen hinsichtlich des Maximalgrenzwerts der Kupferionenabgabe an das Wasser von 3 mg/l nach zwölf Stunden Stagnation in der Rohrleitung in allen Trinkwässern.

Ein gebräuchliches Verfahren der Innenverzinnung von Kupferrohren ist die chemische Abscheidung von Zinn auf der Innenoberfläche der Kupferrohre, wie dies beispielsweise in der US-A-2 282 511 beschrieben ist.

Hierzu wird das Kupferrohr mit einer chemischen Verzinnungslösung durchspült. Die Abscheidung von Zinn erfolgt dann durch einfache chemische Metallverdrängung (Ionenaustausch). Es lösen sich Kupferionen aus dem Grundmetall und gleichzeitig wird eine äquivalente Menge Zinnionen aus der Verzinnungslösung abgeschieden. Dies geschieht unter dem Einfluß des Potentials, das zwischen der Verzinnungslösung und dem Kupfer besteht. Eine äußere Spannung oder ein elektrischer Strom ist nicht erforderlich.

Die Vorteile der chemischen Verzinnung bestehen in einer einfachen Arbeitsweise bei vergleichsweise geringem Kostenaufwand für die apparative Einrichtung sowie der Möglichkeit, Zinn an den Innenseiten der ansonsten nur schwer zugänglichen Kupferrohre abzuscheiden.

Nachteilig ist jedoch die Tatsache, daß der Austausch von Zinnionen gegen Kupferionen in Abhängigkeit von der vorhandenen Potentialdifferenz zwischen der Verzinnungslösung und dem Kupferrohr abläuft. Die Abscheidungsrate nimmt daher in Abhängigkeit von der aufgebrachten Schichtdicke ab, wodurch sich ein inhomogener Schichtaufbau ergibt. Die Reaktion kommt zum Stillstand, sobald das Grundmetall vollständig durch den Überzug bedeckt ist.

Ferner ist festzustellen, daß die Zinnkristalle während des Verzinnungsprozesses relativ unorientiert wachsen. Dies führt zu einer großen freien Oberfläche der Zinnschicht, wodurch bei der späteren Verwendung der Installationsrohre eine Zinnionenabgabe an das Wasser begünstigt wird. Weiterhin wirkt sich dieser Umstand nachteilig auf die Korrosionsbeständigkeit der Zinnschicht aus.

Wegen der in der Praxis häufig auftretenden Schwankungen in der Qualität der Trinkwässer ist man bestrebt, die Sicherheit weiter zu vergrößern, das heißt, die Abgabe von Kupferionen an die zum menschlichen Verbrauch bestimmten Wässer durch Innenverzinnung der Kupferrohre weiter zu reduzieren. Gleichzeitig muß auch die Zinnionenabgabe im innen verzinnten Kupferrohr minimiert werden. Dies trifft insbesondere für Wässer mit niedrigem pH-Wert oder einem hohen Anteil an freier Kohlensäure (K_{B 8,2} > 1,0 mol/m³) zu.

Der Erfindung liegt daher ausgehend vom Stand der Technik die Aufgabe zugrunde, ein Installationsrohr aus Kupfer mit einer verbesserten inneren Schicht aus Zinn zu schaffen, welche auch gegen aggressive Wässer bzw. Flüssigkeiten resistent ist, sowie ein Verfahren zur Beschichtung von Kupferrohren aufzuzeigen, welches einen homogenen und dichten Aufbau der inneren Zinnschicht ermöglicht.

Die Lösung des gegenständlichen Teils der Aufgabe ist in den Merkmalen des Anspruchs 1 zu sehen.

Erfindungsgemäß weist das Installationsrohr aus Kupfer eine vollflächig haftende temperaturgesteuert aufgebrachte Zinnschicht auf die Innenoberfläche auf. Hierbei ist die Dicke der am Übergang vom Kupferrohr auf die Zinnschicht ausgebildeten intermetallischen Phase kleiner als 20 %, vorzugsweise kleiner als 5 % der Gesamtschichtdicke.

Am Übergang zwischen Kupferrohr und Zinnschicht bildet sich eine Legierungsschicht, die intermetallische Phasen enthält. Diese trägt zwar zu einer guten Haftfestigkeit der Zinnschicht bei, ist aber spröde, was sich nachteilig auf die technische Verwendung der Installationsrohre ausgewirkt. Derartige anwendungstechnische Nachteile werden bei dem erfindungsgemäßen Installationsrohr reduziert.

Die Dicke der intermetallischen Phase wird erfindungsgemäß so stark ausgebildet, daß ein inniger Verbund zwischen Kupferrohr und Zinnschicht gewährleistet ist, sich andererseits aber die Sprödigkeit der intermetallischen Phase nicht nachteilig auf die technische Verwendung des Installationsrohrs auswirkt.

Die Gesamtschichtdicke kann den jeweiligen Anforderungen an die Installationsrohre entsprechend zwischen 0,05 µm und größer als 1,5 µm betragen. Über die Temperatursteuerung des Verzinnungsprozesses kann die Dicke der intermetallischen Phase beeinflußt werden. Denkbar ist es auch, gezielt auf die Zusammensetzung der intermetallischen Phase (beispielsweise Cu₆Sn₅) einzuwirken.

Nach den Merkmalen des Anspruchs 2 ist der Kupferanteil der Zinnschicht in dem der Rohrachse zugewandten Bereich, also an der wasserseitigen Oberfläche, kleiner als 10 %. Vorzugsweise liegt der Anteil bei 3 %. An der wasserseitigen Oberfläche der Zinnschicht liegt dann eine reine und kupferarme Zinnschicht vor.

Auf die Dichtigkeit der freien Oberfläche der Zinnschicht wirkt sich besonders vorteilhaft aus, daß die Korngröße der abgeschiedenen Zinnkristalle klein ist und diese eine globulitische Form aufweisen. Sie sind dann kugelähnlich mit einem in alle Richtungen annähernd gleichen Durchmesser, wodurch eine dichte Packungslage möglich ist.

Eine besondere vorteilhafte Ausbildung des erfindungsgemäßen Installationsrohrs ist in Anspruch 3 charakterisiert, wonach die mittlere Korngröße der Zinnkristalle im Verhältnis zur Gesamtsschichtdicke maximal ein Drittel der Gesamtschichtdicke beträgt.

Die temperaturgesteuert aufgebrachte Zinnschicht kennzeichnet sich durch kleine gleichmäßig nebeneinander gepackte Kristalle. Hieraus resultiert eine wesentlich geringere freie Oberfläche der Schicht.

Die Zinnschicht dieses Installationsrohrs weist höchste Haftfestigkeit und sehr gute Korrosionsbeständigkeit auf. Durch die Homogenität und den feinkömigen Aufbau der Zinnschicht ist die Angriffsfläche für die in den Rohren transportierten Flüssigkeiten minimiert. Hierdurch ist gewährleistet, daß die Kupferionenabgabe deutlich unter dem zulässigen Maximalwert liegt. Desweiteren ist auch die Zinnlöslichkeit und damit die Zinnionenabgabe minimiert.

Letztlich zeichnet sich das erfindungsgemäße Installationsrohr durch die hohe Beständigkeit der Zinnschicht gegenüber mechanischer Beanspruchung aus.

Die Lösung des verfahrensmäßigen Teils der Aufgabe ist nach Anspruch 4 darin zu sehen, daß die Temperatur der Verzinnungslösung zweckgerecht variiert wird, so daß eine homogene dichte Schicht aus Zinn entsteht. Hierbei wird die Temperatur der Verzinnungslösung bei einem ersten Spülvorgang niedriger als in einem folgenden Spülvorgang eingestellt.

Der Verzinnungsprozeß wird so begonnen, daß eine große Zahl von gleichmäßig verteilten Kristallkeimen mit gleicher Orientierung entsteht. Anschließend wird die Temperatur gezielt so eingestellt, daß das Wachstum der Kristalle gesteigert wird, wobei diese mit gleichbleibender Orientierung wachsen.

Nach dem ersten Schritt, in dem die Orientierung der Kristalle festgelegt wird, werden somit Bedingungen hergestellt, die zu einem schnellen Wachstum der Kristalle mit gleicher Orientierung führen. Hierdurch erhält man einen homogenen gepackten Aufbau der Zinnschicht, und zwar in einer prozeßoptimiert kurzen Verzinnungszeit. Dies führt insbesondere zu einer merklichen Senkung der Produktionskosten.

Zur Gewährleistung einer möglichst geringen intermetallischen Phase an der Kupferoberfläche beginnt man den Verzinnungsprozeß bei einer geringen Temperatur. In einem folgenden Spülvorgang wählt man eine möglichst hohe Temperatur, um eine hohe Abscheidungsrate und die gewünschte Schichtdicke zu erreichen.

Die Temperatursteuerung kann stufenweise vorgenommen werden, wie dies Anspruch 5 vorsieht. Das zu verzinnende Kupferrohr wird dabei zunächst mit einer Verzinnungslösung durchgespült, die eine Temperatur zwischen 35 °C und 45 °C aufweist. In einem zweiten Spülvorgang liegt die Temperatur der Verzinnungslösung dann zwischen 70 °C und 85 °C.

Eine besonders vorteilhafte Ausführungsform des allgemeinen Erfindungsgedankens ist in den Merkmalen des Anspruchs 6 charakterisiert. Dabei wird die Temperatur der Verzinnungslösung beim Durchspülen kontinuierlich von einer Temperatur zwischen 35 °C und 45 °C auf eine Temperatur zwischen 70 °C und 85 °C erhöht.

Die Temperatursteigerung kann beispielsweise durch eine Durchlauferhitzung der Verzinnungslösung erreicht werden. Hierbei kann eine zeitabhängige Abstimmung auf die Abscheidungsrate und die angestrebtes Korngröße der Zinnkristalle vorgenommen werden.

Zweckmäßig kann es auch sein, die chemische Zusammensetzung der Verzinnungslösung auf den temperaturgesteuerten Verzinnungsvorgang abzustimmen.

Das erfindungsgemäße Verfahren läßt sich in einem kontinuierlichen Fertigungsprozeß besonders wirtschaftlich durchführen. Als Ausgangsmaterial wird ein Kupferrohr bereitgestellt, welches vorzugsweise in Coils von mehreren Hundert Metern Länge aufgerollt ist. Dieses wird zunächst mit einem alkalischen oder einem sauren Reinigungsmittel innen entfettet. Nach dem Entfettungsvorgang wird das Kupferrohr mit Wasser vorgespült. Hieran schließt sich eine weitere Vorbehandlung der inneren Oberfläche des Kupferrohrs durch Beizen an, z. B. mit Kaliumpersulfat

Optional wird nach dem Beizen gespült mit vollentsalztem Wasser. Denkbar ist auch der Einsatz einer Beize, die verträglich ist mit der verwendeten Verzinnungslösung, so daß auf einen nochmaligen Spülvorgang verzichtet werden kann.

Da am Anfang der Kupfergehalt im aufgebrachten Zinn sehr klein gehalten werden soll, kann es von Vorteil sein, wenn das Kupferrohr möglichst kalt in den Verzinnungsprozeß eingeht. Dies kann beispielsweise dadurch erreicht werden, daß die Beize oder das anschließende Spülwasser kalt ist.

Im Anschluß an die Vorbehandlung wird die temperaturgesteuerte Verzinnung vorgenommen, bei der das Kupferrohr mit einer chemischen Verzinnungslösung durchspült wird. Hierbei wird die Abscheidungsrate aus der Verzinnungslösung sowie der Korngrößen- und Packungsaufbau der Zinnschicht durch eine Temperatureinstellung bzw. -steuerung geregelt.

Nach dem Verzinnungsvorgang wird das Kupferrohr kalt oder heiß gespült und getrocknet.

Eine den allgemeinen Erfindungsgedanken weiterführende Maßnahme besteht nach Anspruch 7 darin, daß der Verzinnungsprozeß mit einer Verzinnungslösung beendet wird, deren Temperatur gegenüber der Temperatur der Verzinnungslösung des vorhergehenden Spülvorgangs abgesenkt ist.

Die Dauer des Verzinnungsvorgangs und die Temperaturabsenkung der Verzinnungslösung wird dabei so bestimmt, daß noch beim abschließenden Spülvorgang Zinn abgeschieden wird. Hierdurch kann eine weitere Verbesserung der Oberfläche der Zinnschicht hinsichtlich Aufbau und Dichtheit erreicht werden. Ferner wird das Entstehen von großen Wiskem vermieden. Folglich wird die Ausbildung einer kupferarmen und dichten inneren Oberfläche der Zinnschicht begünstigt.

## Patentansprüche (Patentansprüche für folgende(n) Vertragsstaat(en): DE, FI, FR, IT)

1. Verfahren zur Beschichtung eines Installationsrohrs aus Kupfer mit einer inneren, vollflächig haftenden Zinnschicht, indem das Kupferrohr mit einer Verzinnungslösung durchspült und die Temperatur der Verzinnungslösung variiert wird, wobei die Temperatur der Verzinnungslösung bei einem ersten Spülvorgang niedriger als in einem folgenden Spülvorgang eingestellt wird, und die Temperatur der Verzinnungslösung in einem abschließenden Spülvorgang gegenüber der Temperatur der Verzinnungslösung des vorhergehenden Spülvorgangs abgesenkt wird.

2. Verfahren nach Anspruch 1, wobei das Kupferrohr im ersten Spülvorgang mit einer Verzinnungslösung einer Temperatur zwischen 35°C und 45°C und anschließend im zweiten Spülvorgang mit einer Verzinnungslösung einer Temperatur zwischen 70°C und 85°C durchspült wird.

3. Verfahren nach Anspruch 1 oder 2, wobei die Temperatur der Verzinnungslösung beim Durchspülen kontinuierlich von einem Bereich zwischen 35°C und 45°C auf einen Bereich zwischen 70°C und 85°C erhöht wird.

4. Installationsrohr aus Kupfer mit einer vollflächig haftenden temperaturgesteuert aufgebrachten Zinnschicht auf der Innenoberfläche, erhalten durch ein Verfahren gemäß einem der Ansprüche 1 bis 3, wobei am Übergang vom Kupferrohr auf die Zinnschicht eine intermetallische Phase ausgebildet ist und
- die Dicke der intermetallischen Phase kleiner als 20 %, vorzugsweise kleiner als 5 %, der Gesamtschichtdicke ist;
- der Kupferanteil der Zinnschicht in dem der Rohrachse zugewandten Bereich kleiner als 10 %, vorzugsweise 3%, ist sowie
- die mittlere Korngröße der Zinnkristalle im Verhältnis zur Gesamtschichtdicke maximal ein Drittel der Gesamtschichtdicke beträgt.

## Patentansprüche (Patentansprüche für folgende(n) Vertragsstaat(en): AT, BE, CH, LI, DK, ES, GB, GR, IE, LU, MC, NL, PT, SE)

1. Installationsrohr aus Kupfer mit einer vollflächig haftenden temperaturgesteuert aufgebrachten Zinnschicht auf der Innenoberfläche, wobei am Übergang vom Kupferrohr auf die Zinnschicht eine intermetallische Phase ausgebildet ist und die Dicke der intermetallischen Phase kleiner als 20 %, vorzugsweise kleiner als 5 %, der Gesamtschichtdicke ist

2. Installationsrohr nach Anspruch 1, **dadurch gekennzeichnet, daß** der Kupferanteil der Zinnschicht in dem der Rohrachse zugewandten Bereich kleiner als 10%, vorzugsweise 3 % ist.

3. Installationsrohr nach Anspruch 1 oder 2, **dadurch gekennzeichnet, daß** die mittlere Korngröße der Zinnkristalle im Verhältnis zur Gesamtschichtdicke maximal ein Drittel der Gesamtschichtdicke beträgt.

4. Verfahren zur Beschichtung eines Installationsrohrs aus Kupfer gemäß einem der Ansprüche 1 bis 3 mit einer inneren, vollflächig haftenden Zinnschicht, indem das Kupferohr mit einer Verzinnungslösung durchspült wird, **dadurch gekennzeichnet, daß** die Temperatur der Verzinnungslösung variiert wird, wobei die Temperatur der Verzinnungslösung bei einem ersten Spülvorgang niedriger als in einem folgenden Spülvorgang eingestellt wird.

5. Verfahren nach Anspruch 4, **dadurch kennzeichnet, daß** das Kupferrohr zunächst mit einer Verzinnungslösung einer Temperatur zwischen 35 °C und 45°C und anschließend mit einer Verzinnungslösung einer Temperatur zwischen 70 °C und 85 °C durchspült wird.

6. Verfahren nach Anspruch 4, **dadurch gekennzeichnet, daß** die Temperatur der Verzinnungslösung beim Durchspülen kontinuierlich von einem Bereich zwischen 35 °C und 45 °C auf einen Bereich zwischen 70 °C und 85 °C erhöht wird.

7. Verfahren nach einem der Ansprüche 4 bis 6, **dadurch gekennzeichnet, daß** die Temperatur der Verzinnungslösung in einem abschließenden Spülvorgang gegenüber der Temperatur der Verzinnungslösung des vorhergehenden Spülvorgangs abgesenkt wird.

## Claims (Claims for the following Contracting State(s): DE, FI, FR, IT)

1. Method for coating an installation tube made of copper with an internal tin coating adhering all over in that the copper tube is rinsed with a tinning solution and the temperature of the tinning solution is varied, wherein the temperature of the tinning solution during a first rinsing operation is set lower than in a following rinsing operation, and the temperature of the tinning solution in a concluding rinsing operation is reduced compared with the temperature of the tinning solution of the preceding rinsing operation.

2. Method according to claim 1, wherein the copper tube in the first rinsing operation is rinsed with a tinning solution at a temperature of between 35°C and 45°C and then in the second rinsing operation with a tinning solution at a temperature of between 70°C and 85°C.

3. Method according to claim 1 or 2, wherein the temperature of the tinning solution is continually increased during rinsing from a range between 35°C and 45°C to a range between 70°C and 85°C.

4. Installation tube made of copper with a tin coating which adheres all over and is applied under temperature-controlled conditions on the internal surface, obtained by a method according to one of claims 1 to 3, wherein an intermetallic phase is formed at the interface between the copper tube and the tin coating and
- the thickness of the intermetallic phase is less than 20%, preferably less than 5% of the total coating thickness;
- the copper content of the tin coating in the area facing the axis of the tube is less than 10%, preferably 3%, and
- the average grain size of the tin crystals in relation to the total coating thickness is a maximum of one third of the total coating thickness.

## Claims (Claims for the following Contracting State(s): AT, BE, CH, LI, DK, ES, GB, GR, IE, LU, MC, NL, PT,S)

1. Installation tube made of copper with a tin coating which adheres all over and is applied under temperature-controlled conditions on the internal surface, whereby an intermetallic phase is formed at the interface between the copper tube and the tin coating and the thickness of the intermetallic phase is less than 20%, preferably less than 5%, of the total coating thickness.

2. Installation tube according to claim 1,
**characterised in that** the copper content of the tin coating in the area facing the axis of the tube is less than 10%, preferably 3%.

3. Installation tube according to claim 1 or 2,
**characterised in that** the average grain size of the tin crystals in relation to the total coating thickness is at most one third of the total coating thickness.

4. Method for coating an installation tube made of copper according to one of claims 1 to 3 with an internal tin coating adhering all over, wherein the copper tube is rinsed with a tinning solution, **characterised in that** the temperature of the tinning solution is varied, the temperature of the tinning solution during a first rinsing operation being set lower than in a following rinsing operation.

5. Method according to claim 4, **characterised in that** the copper tube is initially rinsed with a tinning solution at a temperature of between 35°C and 45°C and then with a tinning solution at a temperature of between 70°C and 85°C.

6. Method according to claim 4, **characterised in that** the temperature of the tinning solution is continually increased during rinsing from a range between 35°C and 45°C to a range between 70°C and 85°C.

7. Method according to one of claims 4 to 6,
**characterised in that** temperature of the tinning solution in a concluding rinsing operation is reduced compared to the temperature of the tinning solution of the preceding rinsing operation.

## Revendications (Revendications pour l'(les) Etat(s) contractant(s) suivant(s): DE, FI, FR, IT)

1. Procédé de revêtement d'un tube d'installation en cuivre comprenant une couche d'étain intérieure accrochée sur toute la surface, selon lequel on rince le tube en cuivre avec une solution d'étamage et on modifie la température de la solution d'étamage, la température de la solution d'étamage étant plus faible au cours de la première opération de rinçage que pour l'opération de rinçage suivante et la température de la solution d'étamage est diminuée pour l'opération de rinçage finale par rapport à la température de la solution d'étamage de l'opération de rinçage précédente.

2. Procédé selon la revendication 1,
**caractérisé en ce que**
le tube en cuivre au cours de la première opération de rinçage est à une température comprise entre 35°C et 45°C pour une solution d'étamage et ensuite au cours de la seconde opération de rinçage on passe avec une solution d'étamage d'une température comprise entre 70°C et 85°C.

3. Procédé selon l'une quelconque des revendications 1 ou 2,
**caractérisé en ce que**
lors du rinçage on augmente en continu la température de la solution d'étamage pour passer d'une zone comprise entre 35°C et 45°C à une zone comprise entre 70°C et 85°C.

4. Tube d'installation en cuivre comportant une couche d'étain appliquée sur toute la surface intérieure, avec commande en température, obtenue par un procédé selon l'une quelconque des revendications 1 à 3, le passage du tube en cuivre à la couche d'étain étant réalisé par une phase intermétallique et,
- l'épaisseur de la phase intermétallique est inférieure à 20 % de préférence inférieure à 5 % de l'épaisseur totale de la couche,
- la teneur en cuivre de la couche d'étain dans la zone tournée vers l'axe du tube est inférieure à 10 % et de préférence 3 %, et
- la taille moyenne des grains des cristaux d'étain par rapport à l'épaisseur globale de la couche représente au maximum un tiers de cette épaisseur totale de couche.

## Revendications (Revendications pour l'(les) Etat(s) contractant(s) suivant(s): AT, BE, CH, LI, DK, ES, GB, GR, IE, LU, MC, NL, PT, SE)

1. Tube d'installation en cuivre ayant une couche d'étain appliquée sur toute la surface intérieure, par un dépôt commandé en température et au passage du tube en cuivre à la couche d'étain on a une phase intermétallique et l'épaisseur de la phase intermétallique est inférieure à 20 % de préférence inférieure à 5 % de l'épaisseur totale de la couche.

2. Tube d'installation selon la revendication 1,
**caractérisé en ce que**
la teneur en cuivre de la couche d'étain dans la zone du côté de l'axe du tube est inférieure à 10 % et de préférence 3 %.

3. Tube d'installation quelconque des revendications 1 ou 2,
**caractérisé en ce que**
la dimension moyenne des grains des cristaux d'étain par rapport à l'épaisseur totale de la couche représente au maximum un tiers de cette épaisseur totale de couche.

4. Procédé de revêtement d'un tube d'installation en cuivre selon l'une quelconque des revendications 1 à 3 avec une couche d'étain intérieure accrochée complètement dans le tube en cuivre et rinçage avec une solution d'étain,
**caractérisé en ce qu'**
on modifie la température de la solution d'étain et au cours de la première opération de rinçage la température de la solution d'étain est inférieure à celle de la solution pour les opérations de rinçage suivantes.

5. Procédé de revêtement selon la revendication 4,
**caractérisé en ce qu'**
on rince le tube en cuivre tout d'abord avec une solution d'étamage à une température comprise entre 35°C et 45°C puis avec une solution d'étamage à une température comprise entre 70°C et 85°C.

6. Procédé de revêtement selon la revendication 4,
**caractérisé en ce qu'**
on augmente en continu la température de la solution d'étamage pendant le rinçage, pour passer d'une zone comprise entre 35°C et 45°C à une zone comprise entre 70°C et 85°C.

7. Procédé de revêtement selon l'une quelconque des revendications 4 à 6,
**caractérisé en ce qu'**
on abaisse la température de la solution d'étamage dans une opération de rinçage finale par rapport à la température de la solution d'étamage de l'opération de rinçage précédente.
